**Europäisches Patentamt**

**European Patent Office**

**Office européen des brevets**

(1) Publication number: **0 125 829**
**B1**

## (12) EUROPEAN PATENT SPECIFICATION

(45) Date of publication of patent specification: **23.11.88**

(51) Int. Cl.⁴: **G 02 B 6/24**

(21) Application number: **84302912.5**

(22) Date of filing: **01.05.84**

(54) **Optical connectors.**

(30) Priority: **07.05.83 GB 8312650**

(43) Date of publication of application:
**21.11.84 Bulletin 84/47**

(45) Publication of the grant of the patent:
**23.11.88 Bulletin 88/47**

(84) Designated Contracting States:
**CH DE FR IT LI NL SE**

(56) References cited:
**DE-A-2 528 630**
**US-A-4 181 401**
**US-A-4 185 885**

**PATENTS ABSTRACTS OF JAPAN, vol. 3, no. 89 (E-126), 28th July 1979, page 20 E 126; & JP - A - 54 66 152 (FUJITSU K.K.) 28-05-1979**

(73) Proprietor: **PLESSEY OVERSEAS LIMITED**
**Vicarage Lane**
**Ilford Essex IGI 4AQ (GB)**

(72) Inventor: **Carter, Andrew Cannon**
**32a Stoke Road**
**Blisworth Northampton NN7 3BZ (GB)**

(74) Representative: **Nicholson, Ronald**
**Intellectual Property Department The Plessey Company plc 2-60 Vicarage Lane**
**Ilford Essex IG1 4AQ (GB)**

Courier Press, Leamington Spa, England.

## Description

This invention relates to an optical connector arranged to support an end of an optical fibre and more particularly to complementary connectors for optically connecting the ends of two optical fibres which connectors, when joined will accurately optically align the ends of the fibres.

The invention is particularly suitable for connecting monomode optical fibres since such fibres can have a high degree of eccentricity. Conventional mechanical alignment techniques, such as precision ferrules and V-grooves (as shown for example in US Patent Specification No. 4181401) are normally only suitable for highly concentric fibres, and alignment of monomode fibres by making them concentric using techniques such as centre-less grinding are cumbersome and expensive. These techniques are also unlikely to result in connectors which can be assembled in the field which is highly desirable.

Connectors are known in which optical elements are provided within the connector generally to expand the diameter of the light beam. When two connectors, each with an expanded light beam, are coupled, there is a greater possibility of transferring the light emanating from one fibre into the entrance aperture of the connected fibre. Such an arrangement is illustrated in, for example, US Patent Specification No. 4185885 and Patent Abstracts of Japan, vol. 3, no. 89 (E-126), 28th July 1979, Page 20 E 126; and JP—A—54 66 152 (Fujitsu K.K.) 25-05-1979.

The invention is concerned with connectors having optical elements similarly arranged, but in which adjustment of the optical elements is possible to achieve maximum transfer of power from the end of a first optical fibre in the connector, to the end of a second optical fibre in a complementary connector coupled to the connector.

It is an object of the present invention therefore to provide an optical connector in which such problems of connecting monomode fibres will be overcome or considerably reduced.

According to the present invention there is provided an optical connector arranged to be coupled with a complementary connector to form an optical connection between optical fibres, the connector comprising a housing for supporting an end of an optical fibre substantially on an optical axis of the housing, first and second light displacement means located in the housing on the optical axis, and joining means for joining the connector to the complementary connector, characterised in that one of the light displacement means is of lesser refractive power than the other light displacement means and in that mounting means are provided for said one of the light displacement means, the mounting means permitting adjustment of said one of the light displacement means orthogonally to the optical axis, whereby said light displacement means of lesser refractive power is adjustable relative to the other light displacement means.

In this specification the term "light displacement means" includes any optical device for deflecting and/or focusing a beam of light, such as convex and concave lenses, SELFOC (Registered Trade Mark) lenses and prisms. The term "light" includes light normally invisible to the human eye, such as infra-red and ultra-violet light.

Embodiments of the invention will now be described by way of example only with reference to the accompanying drawings in which:—

Figure 1 is a schematic arrangement of an optical connector according to the invention, and a complementary connector;

Figure 2 is a schematic arrangement of an alternative optical connector;

Figure 3 is a schematic arrangement of a further alternative optical connector; and,

Figure 4 is a cross-sectional view of a connector forming a practical embodiment of the invention.

In the embodiments, the optical lever principle is used to adjust the light beam in each connector. The connector is particularly suitable for monomode optical fibres but can also be used for multimode fibres.

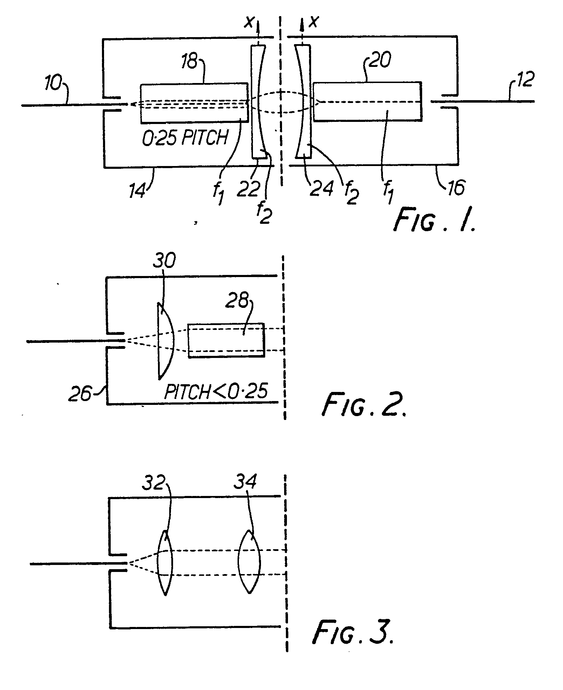

In Figure 1 two fibres 10, 12 are held substantially in alignment by two connector shells 14, 16. A minimum of two lenses is required in each shell and the drawing shows a SELFOC (Registered Trade Mark) rod lens 18, 20 of 0.25 pitch and a diverging plano-concave lens 22, 24 in each shell. A light beam from each fibre is set to be nominally parallel and axial when it leaves each connector shell by radial adjustment of the concave lens 22, 24 and axial adjustment of the SELFOC lens 18, 20 to vary the spacing between the end of the fibre 10, 12 and the SELFOC lens 18, 20. A movement of the concave lens 22, 24 by a distance x is equivalent to a movement of

$$x\frac{f_1}{f_2}$$

at the fibre where $f_1$ is the focal length of the SELFOC lens and $f_2$ is the focal length of the concave lens. Consqeuently a strong "optical lever" can be built into the connector giving very sensitive alignment. The focusing and alignment of each connector can be achieved by either monitoring the far field with a TV or a detector array, or by optimising the coupled power into another complementary connector. The non planar interface as the beam emerges into the air ensures minimal power reflection down the fibre, which can cause noise in monomode and multimode systems.

The connector can be modified to give a non-parallel light beam when it leaves each connector for increased eye safety. This can be achieved by having a controlled diverging beam from either connector and positioning a simple fixed lens between the two connectors to convert the diverging beam into a converging beam before it enters the other connector. Alternatively, one connector can be focused to give a divergent beam and the other complementary connector focused to compensate. (In this case the second connector would launch a convergent beam if operated as a transmitter).

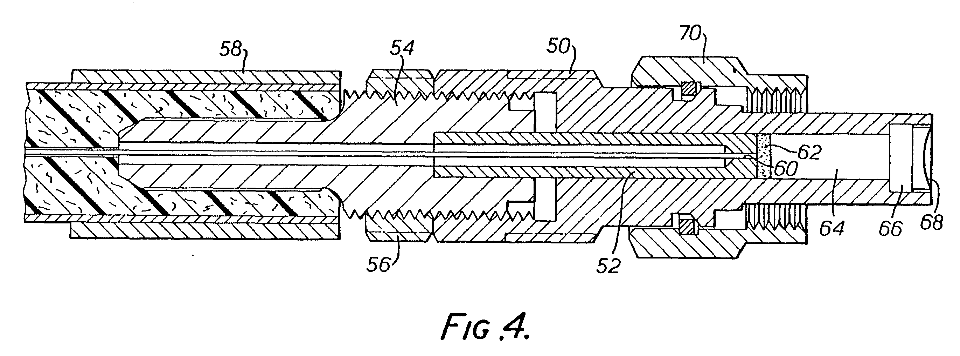

In Figure 2 there is shown a connector 26 having a SELFOC lens 28 and a plano-convex lens 30. The beam from this connector is adjusted in same manner as the Figure 1 embodiment, the lens 30 being moved radially in this case. In Figure 3 two convex lenses 32, 34 are used and either of the lenses can be moved axially or radially to obtain the required form and position of the beam.

The arrangement can also be used for mono and multimode wavelength division multiplex and splitter components where a wavelength selective or semi silvered element is placed between the two halves of the connector. It also enables the fabrications of optoelectronic modules, such as lasers, pinfets etc. with optical connectors instead of permanently bonded optical fibres or "pigtails".

Figure 4 illustrates a practical optical connector according to the invention. This consists of a housing 50 in which is located a ferrule 52. The ferrule is held in position by a fibre supporting member 54 which is screw fitted into the housing 50 and locked by a lock-nut 56. A sheath surrounding the optical fibre is secured to the end of the fibre supporting member 54 by a crimping sleeve 58. The optical fibre and its cladding is secured in the fibre supporting member 54 and the ferrule 52 by a suitable bonding medium such as epoxy resin, and the end of the optical fibre has its cladding removed and extends through the small diameter hole 60 at the end of the ferrule 52. The end of the optical fibre is flush with the end of the ferrule and suitably polished and abuts an index matching pad 62 of, for example, clear silicone rubber. The pad 62 abuts a SELFOC lens 64 which in turn abuts and is bonded to a glass plate 66 which is bonded into the end of the housing 50. A plano-convex lens 68 is aligned on the glass plate 66 to give the required beam and is bonded thereto, the outer walls of the lens 68 being coated with an anti-reflection coating. In this case the pad 62, the lens 64 and the plate 66 are assembled to produce a parallel output beam. The lens 68 is bonded into position after radial adjustment so that the output beam is focussed exactly on the axis of the optical connector. A complementary connector is similarly focused so that, when the two connectors are assembled together, light from either fibre is focused on to the end of the optical fibre in the other connector.

The completed connector can then be coupled to a similar complementary connector and secured together with a captive connecting nut 70 rotatably mounted on the housing 50.

## Claims

1. An optical connector arranged to be coupled with a complementary connector to form an optical connection between optical fibres (10, 12; 60), the connector comprising a housing (14, 16) for supporting an end of an optical fibre (10, 12, 60) substantially on an optical axis of the housing, first and second light displacement means (18, 22; 20, 24; 28, 30; 32, 34; 64, 68) located in the housing on the optical axis, and joining means (70) for joining the connector to the complementary connector, characterised in that one of the light displacement means is of lesser refractive power than the other light displacement means and in that mounting means (66) are provided for said one of the light displacement means, the mounting means permitting adjustment of said one of the light displacement means orthogonally to the optical axis, whereby said light displacement means of lesser refractive power is adjustable relative to the other light displacement means.

2. A connector as claimed in claim 1 wherein said first and second light displacement means are so arranged as to cause light emanating from the optical fibre to exit from the connector parallel to the optical axis.

3. A connector as claimed in claim 1 wherein said first and second light displacement means are so arranged as to cause light emanating from the optical fibre to exit from the connector diverging from the optical axis.

4. A connector as claimed in claim 1, 2 or 3 wherein the first and second light displacement means comprise convex lenses.

5. A connector as claimed in claim 1, 2 or 3 wherein the first light displacement means comprises a rod lens and the second light displacement means comprises a plano-convex lens, the second light displacement means being located adjacent the optical fibre.

6. A connector as claimed in claim 1, 2 or 3 wherein the first light displacement means comprises a rod lens and the second light displacement means comprises a plan-concave lens, the first light displacement means being positioned adjacent the optical fibre.

7. A connector as claimed in any one of claims 1 to 6 wherein one of said first and second light displacement means is adjustable along the optical axis.

## Patentansprüche

1. Ein optisches Verbindungsstück, ausgebildet, um mit einem komplementären Verbindungsstück gekoppelt zu werden, um eine optische Verbindung zwischen optischen Fasern (10, 12; 60) zu bilden, umfassend ein Gehäuse (14, 16), um ein Ende einer optischen Faser (10, 12, 60), im wesentlichen auf einer optischen Achse des Gehäuses, abzustützen, erste und zweite Lichtverschiebungsmittel (18, 22; 20, 24; 28, 30; 32, 34; 64, 68), welche im Gehäuse auf der optischen Achse angeordnet sind sowie Verbindungsmittel (70), um das Verbindungsstück mit dem komplementären Verbindungsstück zu verbinden, dadurch gekennzeichnet, dass eines der Lichtverschiebungsmittel ein geringeres Brechungsvermögen aufweist als das andere Lichtverschiebungsmittel, und dass Montagemittel (66) vorgesehen sind, für besagtes eine der Lichtverschiebungsmittel, wobei die Montagemittel ein Einstellen besagten einen Lichtverschiebungsmittels rechtwinklig zur optischen Achse erlauben und wobei besagtes Lichtverschiebungsmittel mit geringerem Brechungsvermögen bezüglich des anderen Lichtverschiebungsmittels einstellbar ist.

2. Verbindungsstück nach Anspruch 1, wobei besagte erste und zweite Lichtverschiebungsmittel so angeordnet sind, dass aus der optischen Faser austretendes Licht vom Verbindungsstück parallel zur optischen Achse austritt.

3. Verbindungsstück nach Anspruch 1, wobei besagte erste und zweite Lichtverschiebungsmittel so angeordnet sind, dass Licht, welches aus der optischen Faser austritt, bezüglich der optischen Achse divergierend aus dem Verbindungsstück austritt.

4. Verbindungsstück nach einem der Ansprüche 1, 2 oder 3, worin das erste und zweite Lichtverschiebungsmittel konvexe Linsen umfassen.

5. Verbindungsstück nach Anspruch 1, 2 oder 3, wobei das erste Lichtverschiebungsmittel eine Stablinse und das zweite Lichtverschiebungsmittel eine plankonvexe Linse umfasst, wobei das zweite Lichtverschiebungsmittel zur optischen Faser benachbart angeordnet ist.

6. Verbindungsstück nach Anspruch 1, 2 oder 3, worin das erste Lichtverschiebungsmittel eine Stablinse und das zweite Lichtverschiebungsmittel eine plankonkave Linse umfasst, wobei das erste Lichtverschiebungsmittel zur optischen Faser benachbart angeordnet ist.

7. Verbindungsstück nach einem der Ansprüche 1 bis 6, wobei eines besagter erster und zweiter Lichtverschiebungsmittel entlang der optischen Achse einstellbar ist.

**Revendications**

1. Connecteur optique destiné à être couplé à un connecteur complémentaire afin qu'il forme une connexion optique entre des fibres optiques (10, 12; 60), le connecteur comprenant un boîtier (14, 16) de support d'une extrémité d'une fibre optique (10, 12, 60) pratiquement sur l'axe optique du boîtier, un premier et un second dispositif de déplacement de lumière (18, 22; 20, 24; 28, 30; 32, 34; 64, 68) placés dans le boîtier sur l'axe optique, et un dispositif (70) de jonction du connecteur au connecteur complémentaire, caractérisé en ce que l'un des dispositifs de déplacement de lumière a une convergence inférieure à celle de l'autre dispositif de déplacement de lumière, et en ce qu'un dispositif de montage (66) est associé au premier dispositif de déplacement de lumière, le dispositif de montage permettant le réglage du premier dispositif de déplacement de lumière en direction perpendiculaire à l'axe optique si bien que le dispositif de déplacement de lumière de moindre convergence est réglable par rapport à l'autre dispositif de déplacement de lumière.

2. Connecteur selon la revendication 1, dans lequel le premier et le second dispositif de déplacement de lumière sont disposés de manière que la lumière quittant la fibre optique sorte du connecteur parallèlement à l'axe optique.

3. Connecteur selon la revendication 1, dans lequel le premier et le second dispositif de déplacement de lumière sont disposés de manière que la lumière quittant la fibre optique sorte du connecteur en divergeant par rapport à l'axe optique.

4. Connecteur selon la revendication 1, 2 ou 3, dans lequel le premier et le second dispositif de déplacement de lumière sont des lentilles convexes.

5. Connecteur selon la revendication 1, 2 ou 3, dans lequel le premier dispositif de déplacement de lumière est une lentille sous forme d'un barreau et le second dispositif de déplacement de lumière est une lentille plan-convexe, le second dispositif de déplacement de lumière étant placé près de la fibre optique.

6. Connecteur selon la revendication 1, 2 ou 3, dans lequel le premier dispositif de déplacement de lumière est une lentille en forme de barreau et le second dispositif de déplacement de lumière est une lentille plan-concave, le premier dispositif de déplacement de lumière étant disposé près de la fibre optique.

7. Connecteur selon l'une quelconque des revendications 1 à 6, dans lequel l'un des premier et second dispositifs de déplacement de lumière est réglable le long de l'axe optique.

FIG . 1.

FIG. 2.

FIG. 3.

Fig. 4.